# NOUVEAU FASCICULE DE BREVET EUROPEEN

(11) **EP 3 113 902 B2**
(45) Date de publication et mention de la décision concernant l'opposition: **12.01.2022**
(45) Mention de la délivrance du brevet: 29.08.2018
(21) Numéro de dépôt: 15713539.3
(22) Date de dépôt: 26.02.2015
(51) Int. Cl.: F28F 13/18, B23K 35/28, B23K 35/02, B32B 15/01, C22C 21/00

(54) **TÔLE DE BRASAGE À PLACAGES MULTIPLES**
LÖTMETALLBLECH MIT MEHRLAGIGER UMMANTELUNG
MULTIPLY-CLAD BRAZING METAL SHEET

(30) Priorité: 06.03.2014 FR 1400551
(43) Date de publication de la demande: 11.01.2017
(60) Demande divisionnaire: 18166037.4
(73) Titulaire: Constellium Neuf Brisach, 68600 Biesheim (FR)
(72) Inventeur: PERRIER, Malika Marie, F-38000 Grenoble (FR); ARBAB, Alireza, F-38140 Rives (FR); PEGUET, Lionel, F-38950 Quaix-en-Chartreuse (FR); DELHOMME, Myriam, F-38000 Grenoble (FR)
(74) Mandataire: Constellium - Propriété Industrielle
(86) Numéro de dépôt international: PCT/FR2015/000041
(87) Numéro de publication internationale: WO 2015/132482

(56) Documents cités:
- EP-A2- 0 823 305
- WO-A1-03/089237
- WO-A1-2005/118899
- WO-A1-2006/043137
- WO-A1-2007/042206
- WO-A1-2013/180630
- WO-A1-2014/017976
- WO-A2-2006/044500
- WO-A2-2009/142651
- WO-A2-2010/138378
- JP-A- H1 053 828
- JP-A- H10 298 686
- JP-A- H11 140 574
- JP-A- 2003 027 166
- JP-A- 2008 248 361
- US-A1- 2002 142 185
- US-A1- 2006 078 728
- US-A1- 2007 051 503
- US-A1- 2007 122 648
- US-A1- 2011 240 277
- US-A1- 2012 237 793
- US-B1- 6 451 453
- US-B1- 7 255 932
- "Material Selection and Fabrication" In: Kuppan Thulukkanam: "Heat Exchanger Design Book (Second Edition)", 4 février 2013 (2013-02-04), CRC Press, Taylor & Francis Group, New York, XP002733077, ISBN: 978-1-4398-4212-6 pages 852-853, page 852; tableau 13.31
- ANONYMOUS: "International Alloy Designations and Chemical Composition Limits for Wrought Aluminum and Wrought Aluminum Alloys", THE ALUMINUM ASSOCIATION, January 2015 (2015-01-01), pages 4 - 5
- RICHARD WESTERGARD ET AL.: "New High Strength, Long-Life Aluminium Alloys with Excellent Sagging Resistance for Heat Exchanger Tube Applications", 71H VEHICLE THERMAL MANAGEMENT SYSTEMS (VTMS 7) CONFERENCE & EXHIBITION WHICH TOOK PLACE, 10 May 2005 (2005-05-10)
- RAIMUND SICKING ET AL.: "New Rolled Products for Seam Welded Heat Exchanger Tubes", INTERNATIONAL CONGRESS ALUMINIUM BRAZING, 26 May 2004 (2004-05-26)
- Hatch John E.: "Aluminum Properties and Physical Metallurgy", 1984, pages 148-153
- "Aluminium Taschenbuch", 2002, Aluminium-Verlag, pages 278-279
- "Aluminum Brazing Handbook", janvier 1990, The Aluminium Association, page 30D31
- "Talat Lecture 4601, Introduction to Brazing of Aluminum Alloys", 1994
- D. Altenpohl: "Aluminum Viewed from Within", 1982, pages 132-135D27A.
- Wittebrood:"Microstructural Changes in Brazing Sheet due to Solid-Liquid Interaction", 2009, pages 29-38
- S.D. Henry et al.: "ASM Specialty Handbook, Aluminium and Aluminium Alloys", 1993
- "DIN EN 515 , 1993D33 "Heat Exchanger Handbook", 2013, pages 851-853, 1126-1134
- "Aluminiumtaschenbuch", 1996, vol. 2, page 71

## Description

### Domaine de l'invention

L'invention concerne le domaine des tôles de brasage pour tubes ou plaques d'échangeurs thermiques en alliages d'aluminium, notamment ceux utilisés pour le refroidissement ou l'optimisation du rendement des moteurs, le chauffage ou la climatisation de l'habitacle, mais aussi pour toute autre fonction d'échange thermique, dans les véhicules automobiles.

Sont toutefois plus particulièrement concernées les tôles pour tubes ou plaques d'échangeurs soumis à un environnement corrosif sévère tels que les tubes ou plaques de refroidisseurs d'air de suralimentation subissant une recirculation des gaz d'échappement ou encore les plaques d'évaporateurs de climatisation.

### Etat de la technique

Les alliages d'aluminium sont désormais majoritairement utilisés dans la fabrication des échangeurs thermiques pour l'automobile en raison de leur faible densité, qui permet un gain de poids, notamment par rapport aux alliages cuivreux, tout en assurant une bonne conduction thermique, une facilité de mise en œuvre et une bonne résistance à la corrosion.

Tous les alliages d'aluminium dont il est question dans ce qui suit sont désignés, sauf mention contraire, selon les désignations définies par l' « Aluminum Association » dans les « Registration Record Series » qu'elle publie régulièrement.

Les échangeurs comportent des tubes ou plaques pour la circulation du fluide interne et des ailettes ou intercalaires, ainsi qu'éventuellement un perturbateur, pour augmenter le transfert thermique entre le fluide interne et le fluide externe, et leur fabrication se fait soit par assemblage mécanique, soit par brasage.

Dans le cas des refroidisseurs d'air de suralimentation, connus de l'homme du métier sous l'appellation RAS (refroidisseur d'air de suralimentation), la configuration habituelle est la suivante : la tôle d'âme constituant le tube ou la plaque, généralement en alliage d'aluminium de la série AA3xxx, est revêtue sur ses faces externe et interne d'un alliage dit de brasage, généralement de la série AA4xxx. Celui-ci présente l'intérêt de fondre à une température inférieure à la température de fusion de l'âme et, par application d'un cycle thermique de brasage, de pouvoir créer une liaison entre deux matériaux à assembler, c'est à dire braser, l'alternative étant le soudage.

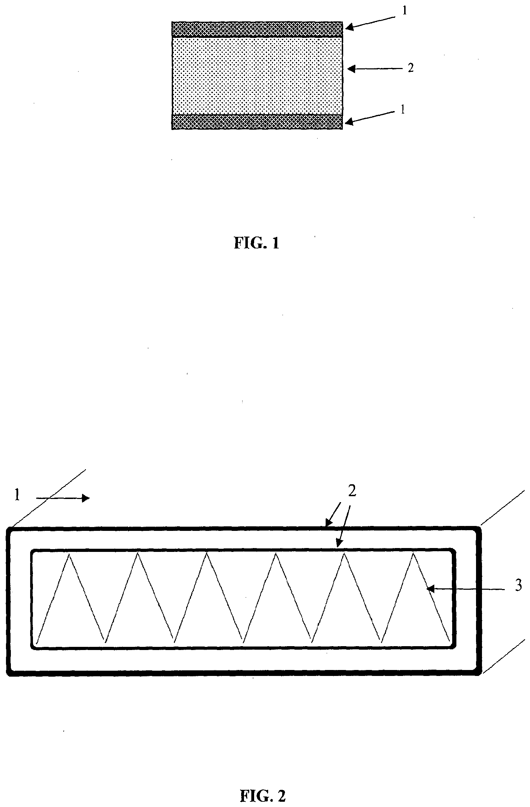

Cette configuration est illustrée par la figure 1, l'âme de la bande à tube portant le repère 2 et ses placages interne et externe en alliage de brasage le repère 1. Les intercalaires, qui se positionnent entre les différents rangs de tubes, sont constitués d'un alliage de la série AA3xxx non plaqué. De la même façon, les perturbateurs, qui sont, quant à eux, insérés dans les tubes, sont également en alliage de la série AA3xxx et non plaqués. Le brasage des intercalaires sur les tubes est assuré par le placage AA4xxx de la face externe du tube. Le brasage des perturbateurs dans les tubes est assuré par le placage 4xxx de la face interne du tube. Les alliages AA3xxx utilisés pour les intercalaires et les perturbateurs peuvent être identiques ou non. L'alliage de la série AA3xxx utilisé pour l'âme du tube est le plus souvent en alliage dit « long-life », c'est-à-dire à bonne résistance à la corrosion externe, saline.

Un schéma d'un tel tube à perturbateur est représenté en figure 2, le tube portant le repère 1, le perturbateur le repère 3 et les placages d'alliage de brasage le repère 2.

Un exemple en est décrit dans la demande EP 0283937 A1 de Nihon Radiator Co. Ltd.

Il existe également des refroidisseurs d'air de suralimentation ainsi que des évaporateurs de circuit de climatisation à plaques qui comportent donc des ailettes ou intercalaires sur chaque face et nécessitent aussi la présence d'une couche en alliage de brasage de la série AA4xxx sur chacune d'elles.

Par ailleurs, les conceptions de moteurs dans lesquelles des gaz d'échappement sont mélangés avec de l'air atmosphérique extérieur et réinjectés à l'admission via un passage par le refroidisseur d'air de suralimentation, sont de plus en plus fréquentes aujourd'hui, avec le but final de réduire les émissions polluantes des véhicules.

Dans cette configuration, les gaz d'échappement, susceptibles de se condenser, peuvent générer dans le refroidisseur un milieu corrosif particulièrement sévère, caractérisé notamment par un faible pH (pouvant être significativement inférieur à 3).

Les évaporateurs à plaques de climatiseurs subissent aussi une attaque corrosive, dans des conditions toutefois moins sévères, liées aux projections notamment salines du milieu routier.

Dans la configuration avec tubes ou plaques telle que décrite ci-dessus, une diffusion importante du silicium, contenu dans l'alliage de placage de la série AA4xxx, vers l'alliage d'âme constituant le cœur du tube se produit lors de l'opération de brasage, dégradant par là même sa capacité de résistance à la corrosion.

De manière générale, pour améliorer la résistance à la corrosion des tôles de brasage, et essentiellement dans le cas des tubes avec circulation d'un liquide refroidisseur en interne, une solution consiste à remplacer le placage interne en alliage de brasage de la série AA4xxx par un placage de protection dit sacrificiel en alliage relativement pur, des séries AA1xxx ou AA7xxx. Toutefois, dans le cas des échangeurs à plaques tels que décrits plus haut, ou des tubes à perturbateur, où l'assemblage par brasage est nécessaire des deux côtés, cette solution est évidemment inapplicable.

Une alternative connue de l'homme du métier consiste à intercaler lors du colaminage, entre l'alliage d'âme du tube et son revêtement interne en alliage de brasage de la série AA4xxx, un placage intermédiaire en alliage de la série AA1xxx ou AA7xxx.

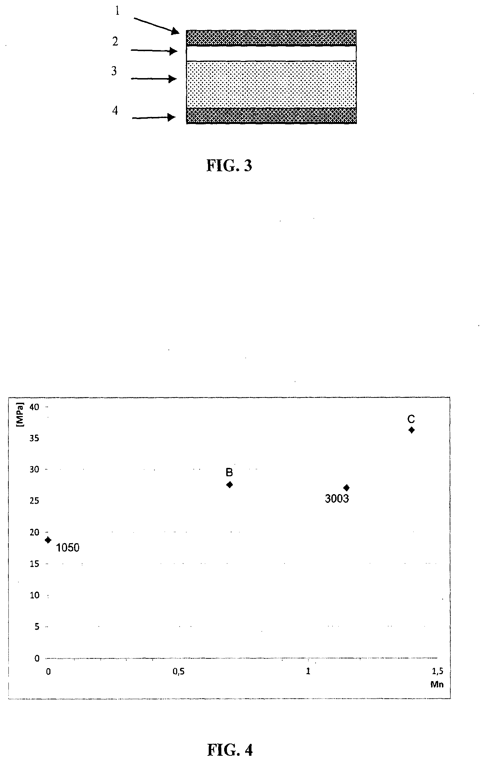

Une telle configuration est représentée schématiquement en figure 3, l'âme du tube portant le repère 3, le revêtement extérieur en alliage de la série AA4xxx le repère 4, le revêtement intérieur également en alliage de la série AA4xxx le repère 1 et le revêtement intermédiaire en alliage de la série AA1xxx ou AA7xxx le repère 2.

Un tel revêtement intermédiaire améliore le comportement en corrosion selon deux mécanismes :
Il limite la diffusion, lors du brasage, du silicium du placage interne vers l'âme du tube et inversement d'éléments tels que le cuivre de l'âme vers le placage, mais aussi, il assure une protection de type anode sacrificielle, le potentiel de corrosion de la couche intermédiaire étant inférieur à celui du placage.

Ces tôles « multi-plaquées » sont connues de l'homme du métier et décrites notamment dans les demandes JP 2003027166 A de Kobe Steel Ltd. Shinko Alcoa, JP 2005224851 A de Shinko Alcoa Yuso Kizai KK, WO 2006/044500 A2 et WO 2009/142651 A2 d'Alcoa Inc, WO 2007/042206 A1 de Corus Aluminium Walzprodukte GmbH, US 2010/0159272 A1 de Novelis, etc...

L'utilisation de ce type de tôles « multi-plaquées » dans un refroidisseur d'air de suralimentation avec passage de gaz d'échappement est décrite dans la demande WO 2008/063855 de Modine Mfg Co.

Elle fait aussi l'objet de la publication « New Advanced Materials-New Opportunities for Brazed HX Folded Tubes & Hydro MultiClad Materials», Hartmut Janssen, 7th Aluminium Brazing Conference, 2012, tout comme des demandes WO2009/128766A1 de « Sapa Heat Transfer AB », WO03/089237, EP2065180A1, WO2006/044500A2 de « Alcoa Inc. », WO2007/042206A1 et FR2876606 de « Corus Aluminium Walzprodukte GmbH ».

Toutefois, bien que de telles configurations permettent d'améliorer quelque peu la résistance à la corrosion du tube, elles peuvent s'avérer insuffisantes dans des conditions de sollicitation particulièrement sévères, comme c'est le cas pour les échangeurs thermiques soumis à une recirculation des gaz d'échappement caractérisés en particulier par un faible pH.

En outre, les alliages utilisés pour la couche intermédiaire ayant une contrainte d'écoulement faible à haute température, le laminage à chaud d'un composite multicouche les incluant est particulièrement difficile. Des essais industriels effectués sur douze bobines par la demanderesse ont révélé un colaminage très difficile voire impossible.

Une autre méthode proposée pour contourner les problèmes de laminage, est la coulée multi-alliage par les procédés soit *Simultaneous Multi-Alloy Casting* (SMAC) soit *Unidirectional Solidification of Casting* (USoC) d'Alcoa. Le principe est décrit en détails dans la demande WO2009/142651A2 pour les deux méthodes. Toutefois, les coûts de ce type de coulée s'avèrent relativement élevés et sa mise en œuvre délicate.

D'autres solutions consistent dans l'application d'un traitement de surface après brasage. Tel est le cas de la solution décrite dans la demande FR 2916525 A1 de Valeo Systèmes Thermiques, qui préconise un revêtement à base de résines pour l'intérieur de tubes d'échangeurs. Un autre exemple de traitement de surface, en l'occurrence un dépôt électro-céramique, est donné dans la demande WO 2010/019664. La demande FR 2930023 de Valeo Systèmes Thermiques mentionne quant à elle la possibilité de réaliser un boehmitage de l'ensemble de l'échangeur.

Enfin, la demande EP 1906131 A2 de International Truck décrit une solution consistant en l'application d'un traitement de surface métallique à base de Ni ou Co.

De telles options s'avèrent toutefois trop onéreuses pour constituer une réalisation tout à fait satisfaisante au plan industriel.

### Problème posé

Une solution connue pour faciliter le laminage consiste à augmenter la contrainte d'écoulement à chaud du placage intermédiaire, notamment par l'addition d'éléments durcissants. C'est le cas du titane, à des teneurs allant jusqu'à 0.3% comme mentionné dans la demande WO2009/128766A1 de « Sapa Heat Transfer AB ». Le manganèse y est également cité comme durcissant par solution solide.

Dans ce sens, les demandes ci-dessus, ainsi que WO2009/142651A2 de « Alcoa Inc. » revendiquent une couche intermédiaire en alliage de la série AA3xxx.

L'alliage du type AA3003 est aussi classiquement utilisé dans les échangeurs, car il présente un très bon compromis résistance mécanique, corrosion et formabilité. Cependant, sa teneur élevée en fer (jusqu'à 0.7%) le rend plus sensible à la corrosion qu'un alliage du type AA1050 par exemple. De plus, la présence de cuivre jusqu'à 0.2% le rend moins sacrificiel et plus sensible à la corrosion en général et intergranulaire en particulier.

L'invention vise à optimiser le choix du matériau composite ou tôle de brasage multicouches en alliage d'aluminium, et en particulier de l'âme et du placage intermédiaire, destiné(e)s à la réalisation des échangeurs, pour améliorer leur comportement dans un environnement corrosif sévère tel que celui créé par la recirculation des gaz d'échappement de véhicule automobile, et dans une moindre mesure des évaporateurs de climatisation, sans surplus de matière utilisée ni d'encombrement ou de poids notable et autorisant des conditions de fabrication à partir des tôles de brasage au moins équivalentes, du point de vue de la facilité de mise en œuvre et du coût, aux solutions de l'art antérieur.

### Objet de l'invention

L'invention a pour objet une tôle de brasage selon la revendication 1.

Par structure essentiellement recristallisée on entend une structure dont la proportion de grains recristallisés est au moins de 90% et de préférence 100%.

A cet effet, la présence d'éléments anti-recristallisants du type Cr, V, Zr et Sc est contrôlée et limitée et la plaque destinée à la fabrication de la tôle d'âme subit après coulée et écroutage, et avant colaminage, une homogénéisation à une température de 550 à 630°C pendant au moins une heure.

La composition de la couche intermédiaire est la suivante (% en poids) :
Si : < 0,2 Fe < 0,2 Cu < 0,05 Mn : 0,6 - 0,8 Mg < 0,02 et mieux, au plus de 0.01% Cr < 0,05 Ti < 0,15 Zr < 0,05, autres éléments < 0,05 chacun et 0,15 au total, reste aluminium.

Par ailleurs, la face de la tôle d'âme opposée à la face revêtue de ladite première couche de placage dite intermédiaire peut être revêtue d'une couche de placage en alliage de la série AA4xxx ou d'une autre couche de placage intermédiaire de même composition que la première, elle-même revêtue d'une couche de placage en alliage de la série AA4xxx.

Selon la réalisation la plus courante, les tôles de placage, intermédiaire et externe en alliage du type AA4xxx, ont chacune une épaisseur de 5 à 10% de l'épaisseur totale de la tôle de brasage.

Une tôle de brasage réalisée conformément aux exigences précitées présente, après brasage, une durée de vie sans perforation de la tôle d'âme au test SWAAT, selon la norme ASTM G85-A3, de plus de 8 semaines.

De telles tôles de brasage peuvent être avantageusement utilisées pour la fabrication d'un échangeur thermique de véhicule automobile, en particulier d'un échangeur thermique du type « Refroidisseur d'air de suralimentation » ou RAS, encore connu sous l'appellation de « Charge air cooler » ou CAC, ou d'un échangeur du type « Evaporateur » dans les circuits de climatisation.

L'invention a également pour objet un échangeur thermique du type « Refroidisseur d'air de suralimentation » ou RAS, encore connu sous l'appellation de « Charge air cooler » ou CAC, ou un échangeur thermique du type « Evaporateur » de circuit de climatisation, fabriqué à partir des tôles telles que précitées.

### Description des figures

La figure 1 représente, une tôle de brasage de l'art antérieur à trois couches, la tôle d'âme portant le repère 2 et l'alliage de brasage (appelé encore couche de placage), présent sur chacune des faces de l'âme, le repère 1.
La figure 2 représente schématiquement un tube 1 à perturbateur 3, une ailette ou un intercalaire (non représenté(e), extérieur(e) au tube) pouvant être assemblé sur la face externe du tube par brasage. De la même façon, le perturbateur est assemblé sur la face interne du tube par brasage. A cette fin, les 2 faces du tubes sont revêtues d'un matériau dit de brasage ou de placage généralement de la série AA4xxxx (repère 2 sur la figure).
La figure 3 représente schématiquement la tôle de brasage utilisée pour le tube de la figure 2, mais où a été intercalé, entre l'alliage d'âme du tube et son revêtement interne en alliage de brasage de la série AA4xxx, un placage intermédiaire.

L'âme du tube porte le repère 3, le revêtement extérieur en alliage de la série AA4xxx le repère 4, le revêtement intérieur également en alliage de la série AA4xxx le repère 1 et le revêtement intermédiaire le repère 2.

La figure 4 présente les résultats d'essais de rhéologie à chaud sur alliages AA1050, AA3003, B de l'essai B et C de l'essaiC du chapitre « Exemples » et à 480°C.
En ordonnée la contrainte d'écoulement en MPa et en abscisse la teneur en Mn (% en poids).

La figure 5 présente les résultats des essais de laminage sur matériaux multicouches avec couches intermédiaires différentes : AA1050, AA3003 et un alliage selon l'invention, « B » de l'essai B, et un alliage « C » comme un exemple comparatif de l'essai C du chapitre « Exemples ».
En ordonnée le nombre d'essais N, en abscisse le type d'alliage et à droite le résultat.
1 correspond à un placage tout à fait réussi.
0 correspond à un placage satisfaisant, pouvant comprendre quelques défauts en début et fin de colaminage du matériau composite.
-1 correspond à l'absence d'adhésion lors du colaminage.

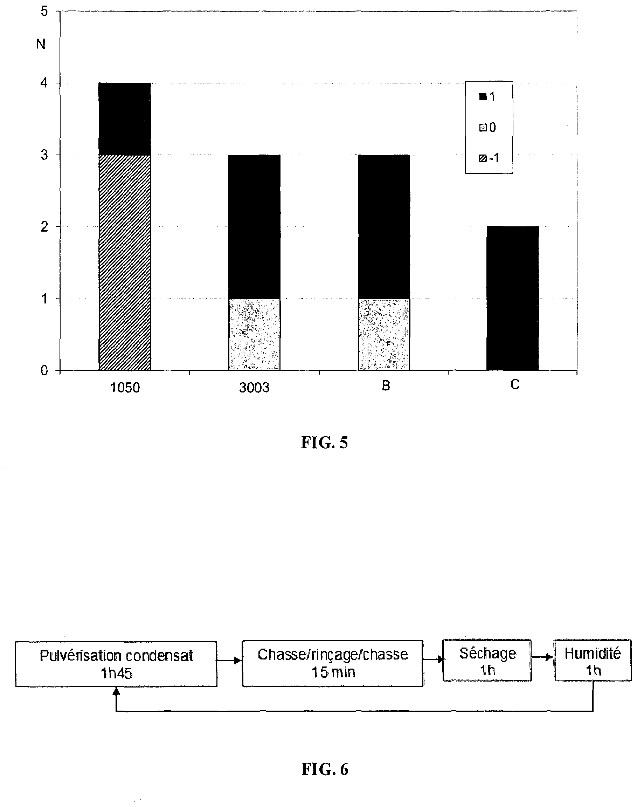

La figure 6 présente le schéma du cycle du test mis au point spécifiquement par la demanderesse pour reproduire les conditions particulières de corrosion des RAS (refroidisseurs d'air de suralimentation) et réalisé en enceinte climatique à une température de 50°C.

### Description de l'invention

L'invention en accord avec la revendication 1 consiste en un choix judicieux de l'alliage du placage (ou couche) intermédiaire et, pour l'âme, du type d'alliage, soit de la série AA3xxx, et de son état métallurgique, pour la réalisation d'une tôle de brasage du type « multicouche », adaptée aux conditions sévères de corrosion que subissent en service ces matériaux notamment de refroidisseurs d'air de suralimentation (RAS ou CAC) ou évaporateurs de climatisation d'habitacle.

Cette résistance à la corrosion accrue est obtenue grâce à la présence d'une couche intermédiaire entre l'âme et le placage de brasage sur au moins une face. Par ailleurs, l'âme est en alliage de la série AA3xxx (typiquement 3915 ou 3916) ayant subi, après coulée de la plaque et avant laminage, une homogénéisation à une température de 550 à 630°C pendant au moins une heure, l'alliage de brasage de placage est de la série AA4xxx (4045 ou 4343) et l'alliage de placage intermédiaire est un alliage d'aluminium selon la revendication 1.

Les plages de concentration imposées aux éléments constitutifs de l'alliage de la couche intermédiaire s'expliquent par les raisons suivantes :
Si a un effet défavorable sur la résistance à la corrosion par piqûres. De ce fait, sa teneur doit être inférieure à 0,2%.
Fe constitue de façon générale une impureté pour l'aluminium ; les phases au fer constituent des sites privilégiés d'initiation de piqûres de corrosion. De ce fait, sa teneur doit être inférieure à 0,2%.
Cu augmente également le potentiel de corrosion réduisant ainsi l'effet d'anode sacrificielle. Par sa répartition non homogène au sein de l'alliage, il peut également accroître les risques de corrosion galvanique et peut favoriser la corrosion intergranulaire par la présence de phases de type Al₂Cu aux joints de grains notamment. De ce fait, sa teneur doit être limitée à celle d'une impureté, soit inférieure à 0,05%, afin d'éviter des phénomènes de dissolution puis re-précipitation du cuivre à la surface.
Mn est un élément durcissant ; il a un effet positif sur la résistance après brasage par durcissement en solution solide et sous forme de fins précipités. Mais surtout, il améliore la contrainte d'écoulement à chaud de l'alliage (cf. Figure 4) facilitant grandement le colaminage.
Mg a une influence positive sur la résistance mécanique, mais il est néfaste à la brasabilité, dans la mesure où il migre à la surface du placage et, surtout dans le cas du brasage « CAB » du type « Nocolok^{®} », en formant une couche d'oxyde qui modifie dans un sens défavorable les propriétés de la brasure. Pour cette raison, et pour de telles applications difficiles, sa teneur doit être limitée à moins de 0,02% voire 0,01%, conformément au brevet EP 1075935 B1 de la demanderesse.
Zn pourrait abaisser le potentiel de corrosion de façon trop importante, rendant ainsi la couche intermédiaire trop sacrificielle avec le risque d'une corrosion très rapide de cette dernière.
Ni et Co, tout comme le fer ont un effet négatif sur la résistance à la corrosion, mais aussi à la flexion. De ce fait, leur teneur doit être réduite à celle d'une impureté.
Ti peut être ajouté jusqu'à une teneur de moins de 0,15% car il a un léger effet durcissant, mais aussi, il améliore le comportement en corrosion de l'alliage, le titane se concentrant sur des couches parallèles à la direction de laminage, ce qui favorise une corrosion latérale plutôt qu'une corrosion par piqûres pénétrantes.

Cr, V, Zr et Sc améliorent notamment la résistance mécanique après brasage, mais agissent également de manière favorable sur la résistance à la corrosion. Toutefois, comme il s'agit d'éléments anti-recristallisants, ils doivent être limités pour assurer la recristallisation de la tôle d'âme lors du brasage, contrairement à la voie choisie selon la demande WO2006/004500A2 de « Alcoa Inc. » qui empêche ladite recristallisation lors du brasage. Par ailleurs, ils accentuent le risque de formation de phases primaires à la coulée. Leur addition est ainsi possible mais jusqu'à une teneur au maximum de 0,15% chacun.

En ce qui concerne la face de la tôle d'âme opposée à la face revêtue de ladite première couche de placage dite intermédiaire puis d'une couche de placage en alliage de la série AA4xxx elle peut être revêtue directement d'une couche de placage en alliage de la série AA4xxx, mais une variante avantageuse de cette configuration est un matériau composite multi plaqué symétrique, c'est-à-dire muni d'un placage intermédiaire des deux côtés de l'âme, l'un assurant la résistance à la corrosion interne et l'autre à la corrosion externe, comme cela est particulièrement favorable notamment dans le cas de l'application à des échangeurs du type « RAS ».

En ce qui concerne la tôle d'âme, elle possède après brasage une structure recristallisée à grains allongés, c'est-à-dire présentant un facteur de forme F (longueur maximum / largeur maximum) supérieur à 2.

Pour obtenir ce résultat, la présence d'éléments anti-recristallisants du type Cr, V, Zr et Sc est contrôlée et limitée et la plaque destinée à la fabrication de la tôle d'âme subit, après coulée et écroutage, et avant laminage, une homogénéisation à une température de 550 à 630°C pendant au moins une heure.

Elle est ensuite revêtue des ébauches de placage ; l'ensemble est laminé à chaud jusqu'à une épaisseur typiquement de 3 mm puis à froid jusqu'à une épaisseur typiquement de 0,2 à 1,2 mm.

A ce stade, la tôle de brasage est à l'état connu de l'homme de métier sous l'appellation d'état « H18 ».

Mais la tôle à l'état « H18 » possède une formabilité très limitée rendant difficile la fabrication des éléments d'échangeur.

De ce fait, elle est le plus couramment soumise à un recuit final à une température comprise entre 250 et 450°C, conférant l'état connu de l'homme de métier sous l'appellation d'état « O » et conduisant à la recristallisation de l'alliage en une microstructure à grains allongés, qui est conservée lors du brasage.

Plus précisément, l'homogénéisation de l'âme permet de faire croître les phases dispersoïdes au manganèse, qui ne sont alors plus un frein à la recristallisation. Cet état recristallisé de l'âme présente deux avantages :
L'obtention d'une aptitude au formage suffisante pour les opérations d'emboutissage de la tôle de brasage.

L'élimination du risque d'une corrosion trop rapide de l'âme dans le cas d'une configuration dissymétrique, sans placage intermédiaire sur l'une des deux faces, mais seulement un alliage de la série AA4xxx.

En effet, dans le cas où la structure de l'âme serait fibrée, la corrosion pénètrerait plus facilement que dans le cas d'une microstructure à grains allongés.

De telles tôles de brasage sont ainsi particulièrement adaptées à la fabrication de refroidisseurs d'air de suralimentation (RAS ou CAC) ou évaporateurs de climatisation d'habitacle du fait notamment d'un bon comportement à l'emboutissage, et aussi du fait que les ensembles brasés fabriqués à partir de ces bandes présentent une durée de vie sans perforation de la tôle d'âme au test SWAAT d'au moins 8 semaines. Ils présentent aussi un comportement en corrosion nettement amélioré dans les conditions de fonctionnement d'un refroidisseur d'air de suralimentation ou RAS, en milieu acide, telles que reproduites par le test décrit au chapitre « Exemples » en page 16.

Les études microstructurales effectuées sur des pièces brasées montrent un état totalement recristallisé dans toutes les zones, et une absence de phénomène connu de l'homme de métier sous le nom de LFM (« Liquid Film Migration »).

L'invention consiste dans le meilleur compromis à ce jour possible entre aptitude au laminage et résistance à la corrosion. Elle se différencie de l'art antérieur connu par cette structure recristallisée à grains allongés et par l'addition de manganèse pour durcir l'alliage de la couche intermédiaire, tout en conservant un taux d'impuretés minimal participant à une bonne résistance à la corrosion.

Dans ses détails, l'invention sera mieux comprise à l'aide des exemples ci-après, qui n'ont toutefois pas de caractère limitatif.

### Exemples

On a coulé plusieurs plaques d'alliage d'âme AA3916, d'alliage de brasage AA4343 ainsi que des plaques d'alliages repérés A (comparatif), B (invention) et C (comparatif), pour couche intermédiaire selon l'invention, et des plaques d'alliage AA1050 et AA3003.

L'alliage AA3916 avait la composition suivante (% en poids) :
Si : 0,18 Fe : 0,15 Cu : 0,65 Mn : 1,35 Ti : 0.08 autres éléments < 0,05 chacun et 0,15 au total, reste aluminium,

L'alliage AA4343 avait la composition suivante (% en poids) :
Si : 7,2 Fe : 0,15 Cu : <0,1 Mn : <0,1 Ti : <0,05 autres éléments < 0,05 chacun et 0,15 au total, reste aluminium,

Les alliages A, B et C, pour couche de placage intermédiaire, B étant selon l'invention, avaient les compositions telles qu'au tableau 2 ci-après (% en poids) :

**Tableau 2**

| **Numéro plaque** | **Si** | **Fe** | **Cu** | **Mn** | **Mg** | **Cr** | **Zn** | **Zr** | **Ti** |
|---|---|---|---|---|---|---|---|---|---|
| **A** | 0.11 | 0.21 | 0.007 | 0.36 | 0.001 | 0.001 | 0.004 | 0.001 | 0.019 |
| **B** | 0.101 | 0.16 | 0.002 | 0.71 | 0.001 | 0.001 | 0.004 | 0.002 | 0.020 |
| **C** | 0.10 | 0.14 | 0.001 | 1.35 | 0.001 | 0.001 | 0.002 | 0.002 | 0.016 |

Après coulée et scalpage la plaque en alliage d'âme AA3916 a subi une homogénéisation à 600°C pendant 10 heures.

Des assemblages ont été réalisés à partir de ces plaques de façon à obtenir, en fin de transformation, des pourcentages de placage (en % de l'épaisseur totale) de 7,5 à 8% pour tous les placages.

### Essais de laminage

### Essais préliminaires

Des assemblages avec placage intermédiaire en AA1050 tels que ci-dessous ont ainsi été élaborés, la face opposée de l'âme recevant un placage unique en AA4343, comme dans tous les cas suivants :

| | **Si** | **Fe** | **Cu** | **Mn** | **Ti** |
|---|---|---|---|---|---|
| Ame : AA3916 | <0.2 | <0.2 | 0.65 | 1.35 | 0.08 |
| Placage de brasage AA4343 | 7.2 | <0.3 | <0.1 | <0.1 | <0.05 |
| **Placage intermédiaire : AA1050** | 0.11 | 0.21 | 0.0074 | **<0.05** | 0.019 |

Ces assemblages ont été laminés à chaud, puis à froid, pour tenter de produire des bandes plaquées d'épaisseur 0.40 mm.
Mais, comme le montre la figure 5 (abscisse 1050), le laminage n'a pas permis le placage de l'alliage AA1050 dans 75% des cas (trois cas sur quatre).

Les mêmes essais ont été effectués, mais en substituant un alliage AA3003 à l'alliage AA1050. La figure 5 (abscisse 3003) montre que le résultat est bon ou satisfaisant dans tous les cas.

### Essai A (comparatif)

Des assemblages avec placage intermédiaire A tels que ci-dessous ont été élaborés de même :

| | **Si** | **Fe** | **Cu** | **Mn** | **Ti** |
|---|---|---|---|---|---|
| Ame : AA3916 | <0.2 | <0.2 | 0.65 | 1.35 | 0.08 |
| Placage de brasage AA4343 | 7.2 | <0.3 | <0.1 | <0.1 | <0.05 |
| **Placage intermédiaire : A** | 0.11 | 0.21 | 0.0074 | **0.36** | 0.020 |

Ces assemblages ont été laminés à chaud, puis à froid, de façon à produire des bandes plaquées d'épaisseur 0.40 mm.
Ce laminage a été réussi, malgré quelques débordements du placage intermédiaire sans conséquence sur la tôle de brasage finale.

### Essai B (invention)

Des assemblages avec placage intermédiaire B tels que ci-dessous ont été élaborés de la même façon :

| | **Si** | **Fe** | **Cu** | **Mn** | **Ti** |
|---|---|---|---|---|---|
| Ame : AA3916 | <0.2 | <0.2 | 0.65 | 1.35 | 0.08 |
| Placage de brasage AA4343 | 7.2 | <0.3 | <0.1 | <0.1 | <0.05 |
| **Placage intermédiaire : B** | 0.10 | 0.16 | 0.0024 | **0.71** | 0.019 |

Ces assemblages ont été laminés à chaud, puis à froid, de façon à produire des bandes plaquées d'épaisseur 0.40 mm.
Comme le montre la figure 5 (Abscisse B), le laminage a été bon ou satisfaisant dans tous les cas, analogue à celui obtenu avec un placage intermédiaire en alliage AA3003.

### Essai C (comparatif)

Des assemblages avec placage intermédiaire C tels que ci-dessous ont été élaborés de la même façon :

| | **Si** | **Fe** | **Cu** | **Mn** | **Ti** |
|---|---|---|---|---|---|
| Ame : AA3916 | <0.2 | <0.2 | 0.65 | 1.35 | 0.08 |
| Placage de brasage AA4343 | 7.2 | <0.3 | <0.1 | <0.1 | <0.05 |
| **Placage intermédiaire : C** | 0.10 | 0.14 | 0.0010 | **1.35** | 0.016 |

Ces assemblages ont été laminés à chaud, puis à froid, de façon à produire des bandes plaquées d'épaisseur 0.40 mm.
Les résultats ont été bons, comme le montre la figure 5 (Abscisse C) avec une laminabilité proche de celle obtenue avec l'alliage AA3003.

### Essais de résistance à la corrosion

Ces bandes, issues des essais A, B et C, ont été soumises au traitement de recuit final à une température de 400°C pendant une heure.
Elles ont ensuite subi une simulation de cycle de brasage comprenant une montée en température à 40°C/min jusqu'à 550°C puis à 20°C/min jusqu'à 600°C avec un palier de 2min à 600°C. Le refroidissement s'est effectué dans le four à -60°C/min. Divers échantillons découpés dans les bandes précitées, avec couches intermédiaires A, B et C, aux dimensions de 45 mm (L) x 65 mm (TL) x 0.40 mm ont été préparés de manière à exposer uniquement la face à tester, c'est-à-dire celle du côté de laquelle se trouve la couche intermédiaire, les rives et la face arrière étant protégées respectivement avec de la silicone et un adhésif adapté. Compte tenu de cette préparation, la surface exposée était de 2400 mm² ± 100.

Ces échantillons ont été caractérisés en tenue à la corrosion à l'aide d'un test cyclique de résistance aux condensats synthétiques mis au point spécifiquement par la demanderesse pour application aux conditions particulières de corrosion des RAS (refroidisseurs d'air de suralimentation).
Celui-ci est réalisé en enceinte climatique à une température de 50°C et se compose d'une phase de pulvérisation (similaire à un brouillard salin) du condensat synthétique suivi d'une phase de séchage puis d'une phase d'exposition à l'humidité (%RH > 95). La phase de pulvérisation des condensats est suivie d'une phase de « chasse » (évacuation du brouillard de condensat restant) et de rinçage des parois de l'enceinte.
Le détail du déroulement du cycle est présenté en figure 6.
La durée d'exposition était fixée à 6 semaines. Le condensat synthétique était composé d'un mélange d'acide nitrique et d'acide sulfurique additionné de chlorures. On a utilisé une solution équimolaire à 0.005 mole de HNO₃ et H₂SO₄ correspondant à un pH égal à 2 et contenant 1000 ppm d'ions Cl⁻ obtenus par addition de NaCl.
A l'issue de l'exposition, des coupes métallographiques optiques (sens L x TC) ont été effectuées.
Elles ont mis en évidence, sur les tôles issues des essais A, B et C, une latéralisation de la corrosion dans la couche de placage intermédiaire et l'absence de perforation de la tôle d'âme sous-jacente.
Ce comportement est similaire à celui observé dans le cas d'un placage intermédiaire en alliage AA1050 et nettement meilleur que celui constaté dans le cas d'un placage intermédiaire en alliage AA3003. Pour ce dernier, après 6 semaines d'exposition, l'âme révèle une importante corrosion de type intergranulaire affectant jusqu'à 80% de l'épaisseur de la tôle.

Divers échantillons issus des différentes configurations précitées, avec couches intermédiaires A, B et C, prélevés comme ci-dessus, ont été caractérisés en tenue à la corrosion selon la norme ASTM G85-A3 (test SWAAT « Sea Water Acidified Acetic Test »). Ce dernier test est utilisé généralement afin d'estimer la tenue en corrosion des évaporateurs de climatisation.

Les échantillons ont été retirés après 8 semaines d'exposition, rincés à l'eau chaude puis décapés pendant 3 min à l'acide nitrique à 70%.
Des micrographies en coupe (sens L x TC) ont ensuite été effectuées. Elles confirment une localisation de l'amorçage de la corrosion au niveau des aiguilles eutectiques issues de la re-solidification pendant le cycle de brasage puis la propagation et la latéralisation de la corrosion dans la couche de placage intermédiaire qui joue son rôle sacrificiel alors qu'on note l'absence de perforation de l'âme sous-jacente. Tout au plus, les quelques pénétrations observées au niveau de l'âme ne dépassent pas 30% de l'épaisseur dans le cas des configurations A & B et 50% de l'épaisseur dans le cas de la configuration C après 8 semaines d'exposition.
Ce comportement est meilleur que, ou au moins équivalent à, celui observé dans le cas d'un placage intermédiaire du type AA3003 pour lequel la corrosion affecte jusqu'à 50% de l'épaisseur du produit.

## Revendications

1. Tôle de brasage constituée d'une tôle d'âme en alliage d'aluminium de la série AA3xxx, revêtue sur au moins une face d'une première couche de placage dite intermédiaire, elle-même revêtue d'une deuxième couche de placage en alliage de la série AA4xxx, dans laquelle l'alliage de la tôle d'âme est choisi, et la tôle d'âme élaborée, de façon à présenter une structure dont la proportion de grains recristallisés est au moins de 90% après brasage, et dans laquelle l'alliage de la série AA4xxx est choisi parmi un 4045 ou un 4343, et dans laquelle la composition de la couche intermédiaire est la suivante (% en poids) : Si < 0,2 Fe < 0,2 Cu < 0,05 Mn 0.6 - 0.8 Mg < 0,02 Cr < 0,05 Ti < 0,15 Zr < 0,05, autres éléments < 0,05 chacun et 0,15 au total, reste aluminium.

2. Tôle de brasage selon la revendication 1, **caractérisée en ce que** la teneur en Mg de la couche intermédiaire est au plus de 0.01%.

3. Tôle de brasage selon l'une des revendications 1 à 2, **caractérisée en ce que** la face de la tôle d'âme opposée à ladite face revêtue de ladite première couche de placage dite intermédiaire est revêtue d'une couche de placage en alliage de la série AA4xxx.

4. Tôle de brasage selon l'une des revendications 1 à 2, **caractérisée en ce qu'**elle comporte sur la face de la tôle d'âme opposée à la face revêtue de la première couche de placage dite intermédiaire, une autre couche de placage intermédiaire de même composition que la première, elle-même revêtue d'une couche de placage en alliage de la série AA4xxx.

5. Tôle selon l'une des revendications 1 à 4, **caractérisée en ce qu'**elle présente après brasage une durée de vie sans perforation de la tôle d'âme au test SWAAT, selon la norme ASTM G85-A3, d'au moins 8 semaines.

6. Tôle selon l'une des revendications 1 à 5, **caractérisée en ce que** la plaque destinée à la fabrication de la tôle d'âme subit, après coulée et avant laminage, une homogénéisation à une température de 550 à 630°C pendant au moins 1 heure.

7. Utilisation d'une tôle de brasage selon l'une des revendications 1 à 6 pour la fabrication d'un échangeur thermique de véhicule automobile.

8. Utilisation d'une tôle de brasage selon l'une des revendications 1 à 6 pour la fabrication d'un échangeur thermique du type « Refroidisseur d'air de suralimentation » ou RAS, encore connu sous l'appellation de « Charge air cooler » ou CAC.

9. Utilisation d'une tôle de brasage selon l'une des revendications 1 à 6 pour la fabrication d'un échangeur thermique du type « Evaporateur » dans les circuits de climatisation.

10. Echangeur thermique du type « Refroidisseur d'air de suralimentation » ou RAS, encore connu sous l'appellation de « Charge air cooler » ou CAC **caractérisé en ce qu'**il est fabriqué à partir de tôles selon l'une des revendications 1 à 6.

11. Echangeur thermique du type « Evaporateur » de circuit de climatisation **caractérisé en ce qu'**il est fabriqué à partir de tôles selon l'une des revendications 1 à 6.

## Patentansprüche

1. Hartlötblech bestehend aus einer Kernschicht aus einer Aluminiumlegierung der Serie AA3xxx, welche auf mindestens einer Seite mit einer ersten Plattierungsschicht, einer so genannten Zwischenschicht, überzogen ist, die ihrerseits mit einer zweiten Plattierungsschicht aus einer Aluminiumlegierung der Serie AA4xxx überzogen ist, wobei die Legierung der Kernschicht so gewählt und die Kernschicht so ausgebildet ist, dass sie eine Struktur mit einem Anteil an rekristallisierten Körnern von mindestens 90 % nach dem Löten aufweist, und wobei die Aluminiumlegierung der Serie AA4xxx aus einem 4045 oder 4343 ausgewählt ist, und wobei die Zwischenschicht folgende Zusammensetzung aufweist (Gew.-%):
Si < 0,2 Fe < 0,2 Cu < 0,05 Mn 0,6 - 0,8 Mg < 0,02 Cr < 0,05 Ti < 0,15 Zr < 0,05 ; weitere Elemente jeweils < 0,05 und 0,15 insgesamt; Rest Aluminium.

2. Hartlötblech nach Anspruch 1, **dadurch gekennzeichnet, dass** der Mg-Gehalt der Zwischenschicht höchstens 0,01 % beträgt.

3. Hartlötblech nach einem der Ansprüche 1 bis 2, **dadurch gekennzeichnet, dass** die von der mit der ersten Plattierungsschicht, der so genannten Zwischenschicht, überzogenen Seite abgewandte Seite der Kernschicht mit einer Plattierungsschicht aus einer Legierung der Serie AA4xxx überzogen ist.

4. Hartlötblech nach einem der Ansprüche 1 bis 2, **dadurch gekennzeichnet, dass** es auf der von der mit der ersten Plattierungsschicht, der so genannten Zwischenschicht, überzogenen Seite abgewandten Seite der Kernschicht eine weitere Plattierungszwischenschicht gleicher Zusammensetzung wie die erste aufweist, die ihrerseits mit einer Plattierungsschicht aus einer Legierung der Serie AA4xxx überzogen ist.

5. Blech nach einem der Ansprüche 1 bis 4, **dadurch gekennzeichnet, dass** es nach dem Löten eine Lebensdauer ohne Perforation im SWAAT-Test gemäß ASTM G85-A3 von mindestens 8 Wochen aufweist.

6. Blech nach einem der Ansprüche 1 bis 5, **dadurch gekennzeichnet, dass** die Platte zur Herstellung der Kernschicht nach dem Gießen und vor dem Walzen bei einer Temperatur von 550 bis 630°C für mindestens 1 Stunde homogenisiert wird.

7. Verwendung eines Hartlötblechs nach einem der Ansprüche 1 bis 6 zur Herstellung eines Wärmetauschers für Kraftfahrzeuge.

8. Verwendung eines Hartlötblechs nach einem der Ansprüche 1 bis 6 zur Herstellung eines Wärmetauschers des Typs Ladeluftkühler, auch bekannt als Charge Air Cooler oder CAC.

9. Verwendung eines Hartlötblechs nach einem der Ansprüche 1 bis 6 zur Herstellung eines Wärmetauschers des Typs Verdampfer in Klimaanlagen.

10. Wärmetauscher des Typs Ladeluftkühler, auch bekannt als Charge Air Cooler oder CAC, **dadurch gekennzeichnet, dass** er aus Blechen nach einem der Ansprüche 1 bis 6 gefertigt ist.

11. Wärmetauscher des Typs Verdampfer in Klimaanlagen, **dadurch gekennzeichnet, dass** er aus Blechen nach einem der Ansprüche 1 bis 6 gefertigt ist.

## Claims

1. Brazing sheet consisting of a core sheet made of a AA3xxx series aluminum alloy, coated, on at least one side, with a first cladding layer so-called intermediate, itself coated with a second cladding layer made of a AA4xxx series alloy, in which the alloy of the core sheet is selected, and the core sheet is made, such as to have a structure of which the proportion of recrystallized grains is at least 90% after brazing, and in which the AA4xxx series alloy is chosen among a 4045 or a 4343, and in which the composition of the intermediate layer is as follows (wt%):
Si < 0.2 Fe < 0.2 Cu < 0.05 Mn 0.6 - 0.8 Mg < 0.02 Cr < 0.05 Ti < 0.15 Zr < 0.05, other elements < 0.05 each and 0.15 in total, balance aluminum.

2. Brazing sheet according to claim 1, **characterized in that** the content in Mg of the intermediate layer is at most 0.01%.

3. Brazing sheet according to one of claims 1 to 2, **characterized in that** the side of the core sheet opposite said coated side of said first cladding layer so-called intermediate is coated with a AA4xxx series alloy cladding layer.

4. Brazing sheet according to one of claims 1 to 2, **characterized in that** it comprises on the side of the core sheet opposite the side coated with the first cladding layer so-called intermediate, another intermediate cladding layer of the same composition as the first, itself coated with a AA4xxx series alloy cladding layer.

5. Sheet according to one of claims 1 to 4, **characterized in that** it has after brazing a lifespan without perforation of the core sheet to the SWAAT test, according to the standard ASTM G85-A3, of at least 8 weeks.

6. Sheet according to one of claims 1 to 5, **characterized in that** the plate intended for manufacturing the core sheet undergoes, after casting and before rolling, a homogenization at a temperature from 550 to 630 °C for at least 1 hour.

7. Use of a brazing sheet according to one of claims 1 to 6 for the manufacture of a motor vehicle heat exchanger.

8. Use of a brazing sheet according to one of claims 1 to 6 for the manufacture of a heat exchanger of the charge air cooler (CAC) type.

9. Use of a brazing sheet according to one of claims 1 to 6 for the manufacture of a heat exchanger of the "Evaporator" type in the air conditioning circuits.

10. Heat exchanger of the charge air cooler (CAC) type, **characterized in that** it is manufactured from sheets according to one of claims 1 to 6.

11. Heat exchanger of the air conditioning circuit "Evaporator" type **characterized in that** it is manufactured from sheets according to one of claims 1 to 6.
